# FASCICULE DE BREVET EUROPEEN

(11) **EP 3 735 378 B1**
(45) Date de publication et mention de la délivrance du brevet: **17.08.2022**
(21) Numéro de dépôt: 19703148.7
(22) Date de dépôt: 04.01.2019
(51) Int. Cl.: B64C 7/02, F02K 1/34, F02K 1/82, F02C 7/045, B64D 33/02

(54) **STRUCTURE DE TRAITEMENT ACOUSTIQUE POUR NACELLE D'ENSEMBLE PROPULSIF D'AÉRONEF**
AKUSTISCHE BEHANDLUNGSSTRUKTUR FÜR DIE GONDEL EINES TRIEBWERKS EINES FLUGZEUGS
ACOUSTIC TREATMENT STRUCTURE FOR THE NACELLE OF AN AIRCRAFT PROPULSION UNIT

(30) Priorité: 05.01.2018 FR 1850079
(43) Date de publication de la demande: 11.11.2020
(73) Titulaire: Safran Nacelles, 76700 Gonfreville-l'Orcher (FR); Safran Ceramics, 33185 Le Haillan (FR)
(72) Inventeur: BOUILLON, Florent, 33290 PAREMPUYRE (FR); DUPE, Franck, 33000 BORDEAUX (FR); CARRERE, Benoît, 33320 LE TAILLAN MEDOC (FR); DESJOYEAUX, Bertrand, 76700 GONFREVILLE L'ORCHER (FR)
(74) Mandataire: Germain Maureau
(86) Numéro de dépôt international: PCT/FR2019/050018
(87) Numéro de publication internationale: WO 2019/135058

(56) Documents cités:
- FR-A1- 2 934 641
- FR-A1- 3 041 937
- US-A- 4 384 634
- US-A- 5 594 216

## Description

La présente invention se rapporte au domaine du traitement acoustique de nacelles d'ensemble propulsif d'aéronef.

Pour atténuer le bruit généré par un ensemble propulsif, par exemple un turboréacteur, plusieurs structures ou pièces de la nacelle comprennent généralement des panneaux acoustiques.

Un panneau acoustique comprend typiquement deux peaux et une âme alvéolaire du type nid d'abeille enserrée entre les deux peaux. L'âme alvéolaire consiste en des cloisons transversales contribuant à la tenue structurale du panneau en assurant notamment la liaison entre les deux peaux. L'une des peaux, orientée vers la source de bruit, est acoustiquement perméable afin de capter les ondes acoustiques et de réduire l'énergie acoustique au sein de l'âme alvéolaire.

Dans une nacelle de turboréacteur à double flux, le cône d'éjection et la buse primaire de la tuyère d'échappement comprennent typiquement de tels panneaux acoustiques.

Pour supporter les contraintes thermiques et mécaniques auxquelles ils sont exposés, les panneaux acoustiques de tuyère d'échappement sont typiquement réalisés dans des superalliages ou des matériaux composites à matrice céramique qui rendent leur fabrication onéreuse. FR 3041937 A1 et US 5594246 A divulguent chacun une nacelle comprenant des panneaux acoustiques.

Un but de la présente invention est de proposer une structure dotée d'une fonction de traitement acoustique pour nacelle d'ensemble propulsif d'aéronef réduisant les coûts de fabrication et offrant de bonnes performances thermomécaniques, en particulier lorsque cette structure constitue tout ou partie d'un cône d'éjection ou d'une buse primaire de tuyère d'échappement.

A cet effet, l'invention se rapporte à une structure pour nacelle d'ensemble propulsif d'aéronef comprenant une première peau, des raidisseurs fixés à la première peau pour raidir cette première peau, et des modules de traitement acoustique. Chaque module de traitement acoustique comprend une âme alvéolaire et une deuxième peau fixée à l'âme alvéolaire. La première peau et les modules de traitement acoustique sont agencés de sorte que l'âme alvéolaire de chaque module soit enserrée entre la deuxième peau correspondante et la première peau. La première peau ou la deuxième peau du ou des modules de traitement acoustique est acoustiquement perméable pour atténuer la puissance des ondes acoustiques, plus spécifiquement des ondes acoustiques se propageant à la surface de la peau acoustiquement perméable, dans l'âme alvéolaire des modules.

On entend par l'expression « peau acoustiquement perméable » une peau perméable aux ondes acoustiques, c'est-à-dire agencée pour laisser passer des ondes acoustiques, par exemple au travers d'orifices réalisés dans cette peau.

A titre d'exemple non limitatif, une peau acoustiquement perméable peut comprendre des orifices de manière à présenter un taux d'ouverture acoustique compris entre 2% et 20%, la taille de chaque orifice pouvant être d'au moins un dixième de millimètre de diamètre, plus préférentiellement de plus de 0,2 mm.

Cette structure se caractérise en ce que chaque module de traitement acoustique est enchâssé entre deux raidisseurs respectifs, en ce que chaque module de traitement acoustique est en appui simple sur la première peau, et en ce qu'elle comprend des moyens de maintien agencés pour maintenir chaque module de traitement acoustique contre la première peau.

Dans le présent document, on entend par l'expression « appui simple » un contact entre deux surfaces autorisant une mobilité relative d'une surface sur l'autre surface. En l'occurrence, les surfaces en appui simple sont dans l'invention une surface de la première peau et une surface constituée par des extrémités de cloisons transversales formant l'âme alvéolaire. Ainsi, l'âme alvéolaire des modules de traitement acoustique n'est pas fixée à la première peau, par exemple par soudage ou brasage. Chaque module de traitement acoustique est donc mobile relativement à la première peau.

Une telle structure permet de découpler la fonction structurale et la fonction de traitement acoustique de sorte que l'âme alvéolaire et la deuxième peau peuvent être réalisées dans un matériau différent du matériau de la première peau et des raidisseurs sans que les modules de traitement acoustique ne soient soumis à de fortes contraintes mécaniques sous l'effet d'une augmentation de la température.

Par exemple, la première peau et/ou les raidisseurs peuvent comprendre ou être réalisés dans un matériau composite à matrice céramique ou un superalliage.

Les modules de traitement acoustique, c'est-à-dire l'âme alvéolaire et/ou la deuxième peau de ces modules, peuvent comprendre ou être réalisés dans un matériau métallique tel que le titane ou un alliage à base de nickel.

De cette façon, il est possible de réduire le coût de fabrication tout en conférant à cette structure de bonnes performances thermomécaniques, en particulier pour supporter les contraintes thermiques et mécaniques auxquelles la structure est exposée lorsqu'elle constitue tout ou partie d'un cône d'éjection ou d'une buse primaire de tuyère d'échappement.

En effet, la dissociation des fonctions structurales et acoustiques permet à une telle structure de résister aux dilatations thermiques différentielles liées aux différents matériaux qui la composent puisque les modules de traitement acoustique présentent une certaine mobilité par rapport à la première peau au moins dans une direction parallèle à la surface de la première peau.

Les âmes alvéolaires d'une telle structure n'ont donc en principe aucun rôle de tenue structurale ou de raidissement de la structure, ce rôle étant assuré par la première peau et par les raidisseurs.

En outre, l'invention permet de faciliter la fabrication des modules de traitement acoustique, la structure pouvant comprendre un grand nombre de petits modules. La fabrication est a fortiori facilitée lorsque la géométrie de la structure est complexe, par exemple lorsque la structure constitue tout ou partie d'un cône d'éjection de tuyère d'échappement. Notamment, dans ces exemples, la première peau peut avoir une forme concave ou convexe.

Avantageusement, une telle structure facilite aussi les opérations de maintenance. Par exemple, en cas de détérioration locale de la structure, il est possible de remplacer un module de traitement acoustique sans remplacer les autres modules. Pour autre exemple, en cas de détérioration de la peau acoustiquement perméable, celle-ci peut être réparée indépendamment après dépose du ou des modules de traitement acoustique puis, après réparation, en installant à nouveau le module de traitement acoustique en appui sur la peau réparée.

Un autre avantage est lié au fait que les modules de traitement acoustique peuvent être interchangeables entre eux.

De préférence, les moyens de maintien peuvent coopérer avec la deuxième peau de chaque module de traitement acoustique de manière à exercer un effort de maintien des modules contre la première peau.

Dans un mode de réalisation, les raidisseurs peuvent constituer au moins une partie desdits moyens de maintien.

Pour ce faire, les raidisseurs peuvent avoir une section en « T » ou en « Γ ».

Plus spécifiquement, dans un mode de réalisation, chaque raidisseur peut comprendre un premier élément formant butée pour un ou plusieurs modules de traitement acoustique de manière à limiter le déplacement de ce ou ces modules suivant une direction tangentielle à la première peau. Chaque raidisseur peut aussi comprendre un deuxième élément formant butée pour un ou plusieurs modules de traitement acoustique de manière à limiter le déplacement de ce ou ces modules suivant une direction normale à la première peau. Ledit deuxième élément du raidisseur peut ainsi constituer au moins une partie desdits moyens de maintien.

Dans un mode de réalisation, les moyens de maintien peuvent comprendre des lames élastiques fixées sur les raidisseurs.

Dans le présent document, le terme « élastique » se rapporte à la propriété mécanique d'un organe agencé pour reprendre au moins partiellement sa forme et son volume après avoir été soumis à un effort de compression. Ainsi, une lame élastique ou un élément élastique au sens du présent document se comporte typiquement de la même manière qu'un ressort de compression.

Autrement dit, une lame ou un élément élastique est un corps mécanique ayant une géométrie telle et un matériau tel que ce corps permet, sous l'effet de sa déformation lorsqu'il est soumis à un effort de compression, de créer un effort mécanique réciproque.

Dans un mode de réalisation, les moyens de maintien peuvent comprendre un ou plusieurs éléments élastiques latéraux agencés pour exercer une pression latérale des modules de traitement acoustique contre les raidisseurs respectifs entre lesquels ces modules sont enchâssés, de manière à immobiliser ces modules suivant une direction tangentielle à la première peau.

Alternativement ou complémentairement, les moyens de maintien peuvent comprendre un ou plusieurs éléments élastiques transversaux agencés pour exercer une pression transversale des modules de traitement acoustique contre la première peau, de manière à immobiliser ces modules suivant une direction normale à la première peau.

De tels éléments élastiques latéraux et/ou transversaux permettent ou améliorent le maintien des modules de traitement acoustique dans la structure.

Dans un mode de réalisation, les éléments élastiques latéraux ou transversaux peuvent être formés par la deuxième peau et/ou l'âme alvéolaire des modules de traitement acoustique, par exemple par des excroissances formant ressorts.

L'invention concerne aussi une tuyère d'échappement de nacelle d'ensemble propulsif d'aéronef comprenant une structure telle que décrite ci-dessus ainsi qu'une nacelle d'ensemble propulsif d'aéronef comprenant une telle structure ou une telle tuyère d'échappement.

Dans un mode de réalisation, les raidisseurs de la structure peuvent s'étendre suivant des directions respectives parallèles à un axe longitudinal de la nacelle.

Dans un autre mode de réalisation, les raidisseurs de la structure peuvent s'étendre circonférentiellement autour d'un axe longitudinal de la nacelle.

D'autres orientations peuvent être données aux raidisseurs.

Le choix de l'orientation des raidisseurs, de leur position, de leur écartement et de leur géométrie respective peut permettre, d'une part, de faciliter l'installation et le maintien des modules de traitement acoustique. D'autre part, cela peut également répondre à l'objectif d'offrir des rigidités d'ensemble à la structure ainsi raidie, en évitant des modes propres vibratoires dans des domaines de fréquences proscrits par l'environnement de fonctionnement.

D'autres caractéristiques et avantages de l'invention apparaîtront à la lecture de la description nullement limitative qui suit et des figures annexées, dans lesquelles :
- La figure 1 est une vue schématique en perspective d'une nacelle de turboréacteur d'aéronef ;
- La figure 2 est une vue schématique en perspective d'un cône d'éjection de tuyère d'échappement selon l'invention, comprenant une première variante de moyens de maintien ;
- La figure 3 est une vue schématique partielle en perspective d'un tronçon du cône d'éjection de la figure 2 ;
- La figure 4 est une vue schématique en perspective d'un module de traitement acoustique du cône d'éjection de la figure 2 ;
- La figure 5 est une vue schématique en perspective d'un cône d'éjection de tuyère d'échappement selon l'invention, comprenant une deuxième variante de moyens de maintien ;
- La figure 6 est une vue schématique en perspective de raidisseurs du cône d'éjection de la figure 5 ;
- La figure 7 est une vue schématique en perspective d'un raidisseur du cône d'éjection de la figure 5 ;
- La figure 8 est une vue schématique partielle en perspective d'une structure selon l'invention, comprenant une troisième variante de moyens de maintien ;
- La figure 9 est une vue schématique partielle en perspective d'un cône d'éjection de tuyère d'échappement selon l'invention ;
- La figure 10 est une vue schématique en perspective d'un tronçon du cône d'éjection de la figure 9, faisant apparaître une quatrième variante de moyens de maintien ;
- La figure 11 est une vue schématique partielle en perspective d'une structure selon l'invention, comprenant une cinquième variante de moyens de maintien ;
- La figure 12 est une vue schématique partielle en coupe transversale de la structure de la figure 11 ;
- La figure 13 est une vue schématique partielle en coupe transversale d'une structure selon l'invention, comprenant une sixième variante de moyens de maintien ;
- La figure 14 est une vue schématique partielle en perspective de la structure de la figure 8, comprenant en outre des éléments élastiques transversaux ;
- La figure 15 est une vue schématique partielle en coupe transversale d'une structure selon l'invention, montrant une première variante d'éléments élastiques latéraux ;
- La figure 16 est une vue schématique partielle en perspective de la structure de la figure 15 ;
- La figure 17 est une vue schématique partielle en coupe longitudinale d'une structure selon l'invention, montrant une deuxième variante d'éléments élastiques latéraux ;
- La figure 18 est une vue schématique partielle en coupe longitudinale d'une structure selon l'invention, montrant une troisième variante d'éléments élastiques latéraux.

Les éléments identiques ou similaires sont repérés par des signes de référence identiques sur l'ensemble des figures.

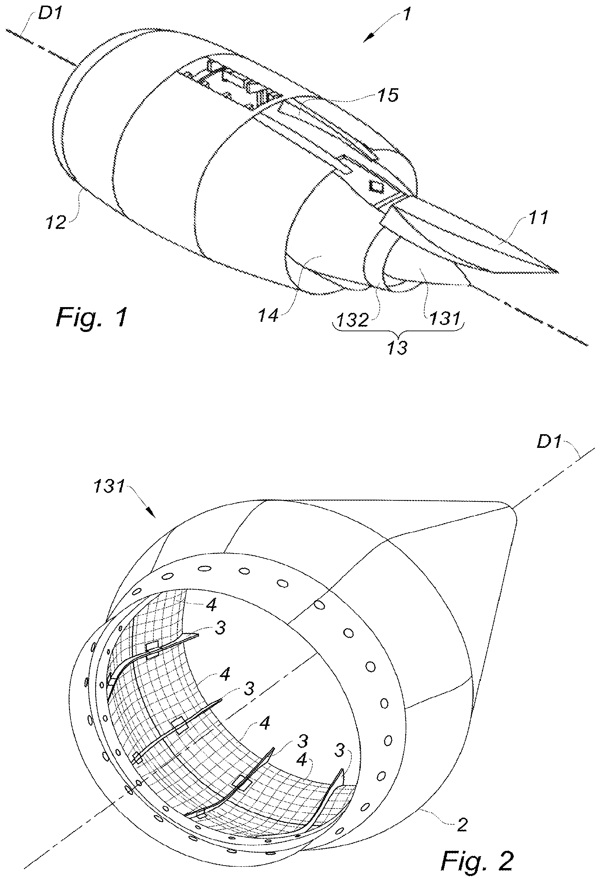

Une nacelle 1 d'ensemble propulsif d'avion est illustrée à la figure 1. Cette nacelle 1 comprend un mât réacteur 11 et un moteur de type turboréacteur à double flux (non représenté) logé dans la nacelle 1. Le mât réacteur 11, partiellement représenté, est destiné à être fixé à une aile (non représentée) ou au fuselage (non représenté) de l'avion.

La nacelle comprend une entrée d'air 12 adaptée pour permettre la captation optimale vers le turboréacteur de l'air nécessaire à l'alimentation d'une soufflante (non représentée) et de compresseurs internes (non représentés) du turboréacteur.

La nacelle 1 s'étend suivant un axe longitudinal D1 représenté confondu avec l'axe du moteur.

Sous le pylône 11, en aval du turboréacteur, la nacelle 1 comprend une tuyère d'échappement 13 comportant un cône d'éjection 131 (« plug » en anglais) et une buse primaire 132 (« nozzle » en anglais). Le cône d'éjection 131 et la buse primaire 132 de la tuyère d'échappement 13 définissent un passage pour un flux d'air chaud sortant du turboréacteur.

La nacelle 1 comprend en outre structure fixe interne 14 et une structure externe 15 qui définissent un passage pour un flux d'air froid du turboréacteur.

L'invention concerne une structure apte à constituer tout ou partie d'une ou plusieurs pièces de la nacelle 1 telles que le cône d'éjection 131 ou la buse primaire 132 de la tuyère d'échappement 13.

Dans l'exemple de la figure 2, cette structure est un cône d'éjection 131.

En référence aux figures 2 à 4, la structure 131 selon l'invention comprend une première peau 2.

Cette première peau 2 comprend une surface externe destinée à être en contact avec le flux d'air chaud sortant du turboréacteur.

Pour renforcer la tenue structurale de la première peau 2, la structure comprend des raidisseurs 3.

Dans cet exemple, les raidisseurs 3 forment des barres de renfort qui s'étendent parallèlement à l'axe longitudinal D1 et régulièrement espacées sur la circonférence du cône d'éjection 131.

Ces raidisseurs 3 s'étendent ici depuis une surface interne de la première peau 2, c'est-à-dire vers l'intérieur du cône d'éjection 131.

Les raidisseurs 3 sont fixés à la première peau 2. Par exemple, les raidisseurs 3 peuvent être des éléments rapportés fixés à la première peau 2 par brasage ou soudage. Alternativement, les raidisseurs 3 et la première peau 2 peuvent être réalisés en une seule pièce, par exemple par drapage de plis fibreux sur un moule.

Le nombre de raidisseurs 3 devrait notamment être déterminé de manière à assurer une bonne stabilité vibratoire et mécanique de la première peau 2, en fonction des contraintes auxquelles la structure 131 sera soumise.

La structure 131 comprend en outre des modules de traitement acoustique 4.

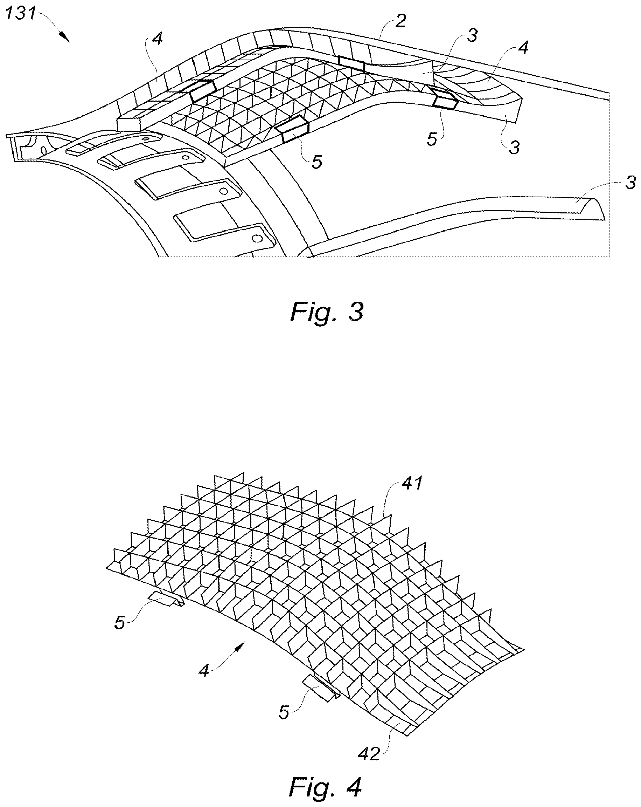

En référence à la figure 4, chaque module de traitement acoustique 4 comprend une âme alvéolaire 41 et une deuxième peau 42 fixée à l'âme alvéolaire 41.

L'âme alvéolaire 41 comprend des clinquants transversaux formant des cavités destinées à constituer des cavités de Helmholtz. La géométrie de ces cavités peut être adaptée aux contraintes de fabrication et aux fréquences à atténuer. Dans l'exemple de la figure 4, chaque cavité est délimitée par quatre clinquants et a donc une section quadrilatérale. Dans un autre exemple de réalisation, non illustré, les cavités peuvent avoir une section hexagonale.

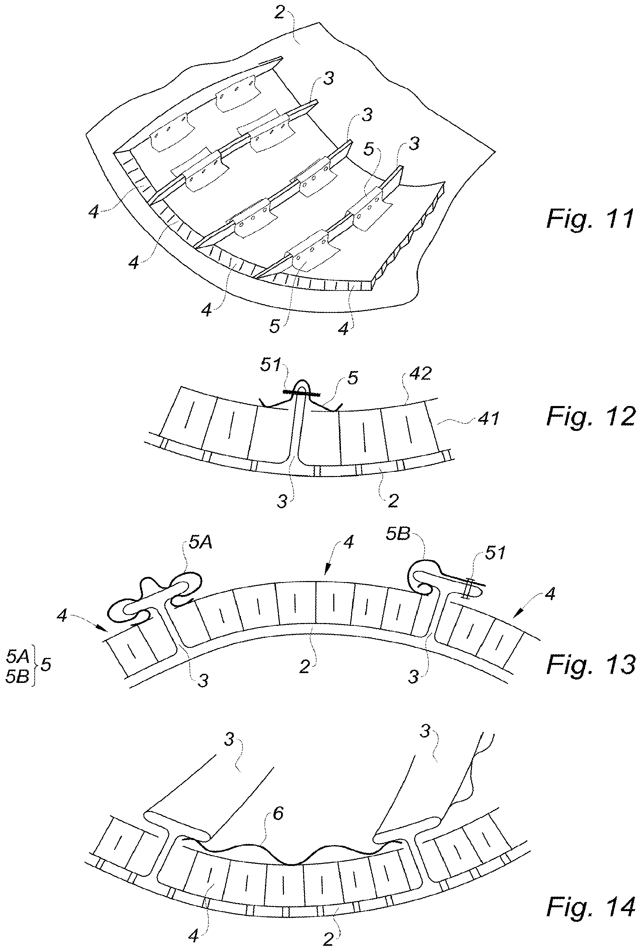

En référence aux figures 3, 4 et 12, la première peau 2 et les modules de traitement acoustique 4 sont agencés de sorte que l'âme alvéolaire 41 de chaque module 4 soit enserrée entre la deuxième peau 42 correspondante et la première peau 2. La deuxième peau 42 n'est pas représentée sur les modules 4 de la figure 3 : cet agencement ressort toutefois clairement de la figure 12 qui montre un exemple de structure selon l'invention en coupe transversale.

Selon l'invention, chaque module de traitement acoustique 4 est enchâssé entre deux raidisseurs 3 respectifs (voir figure 2).

Ainsi, les raidisseurs 3 ont aussi pour fonction de positionner et maintenir les modules de traitement acoustique 4 dans une position fixe relativement à la première peau 2 au moins dans une direction tangentielle par rapport à la première peau 2.

Pour maintenir les modules de traitement acoustique 4 contre la première peau 2, la structure 131 comprend des moyens de maintien 5.

Dans l'exemple des figures 2 à 4, 11 et 12, les moyens de maintien 5 comprennent des lames élastiques 5 fixées sur les raidisseurs 3 à l'aide de moyens de fixation 51 du type rivets (voir figure 12). Par exemple, deux lames élastiques 5 peuvent être ainsi fixées sur chaque raidisseur 3.

Dans cet exemple, chaque lame élastique 5 s'étend de part et d'autre d'un raidisseur 3 de manière à venir en appui contre la deuxième peau 42 des modules de traitement acoustique 4 situés de part et d'autre de ce raidisseur 3 (voir figure 12).

Selon l'invention, chaque module de traitement acoustique 4 est en appui simple sur la première peau 2.

De la sorte, les modules de traitement acoustique 4 sont affranchis des contraintes structurales auxquelles la première peau 2 est soumise.

Les modules 4 sont destinés à procurer un traitement acoustique à la nacelle 1.

Dans l'exemple du cône d'éjection 131 de la figure 2, la première peau 2 est rendue acoustiquement perméable, par exemple à l'aide d'orifices (non représentés) réalisés dans la première peau 2. De tels orifices permettent de capter et d'atténuer, au sein de l'âme alvéolaire des modules 4, des ondes acoustiques qui se propagent au niveau de la surface externe de la première peau 2.

Dans un mode de réalisation non représenté, l'atténuation d'ondes acoustiques au sein de l'âme alvéolaire des modules 4 pourrait être réalisée en rendant la deuxième peau 42 acoustiquement perméable, la première peau 2 étant acoustiquement imperméable. Dans ce cas, les ondes atténuées seraient des ondes se propageant au niveau d'une surface externe de la deuxième peau 42 des modules 4.

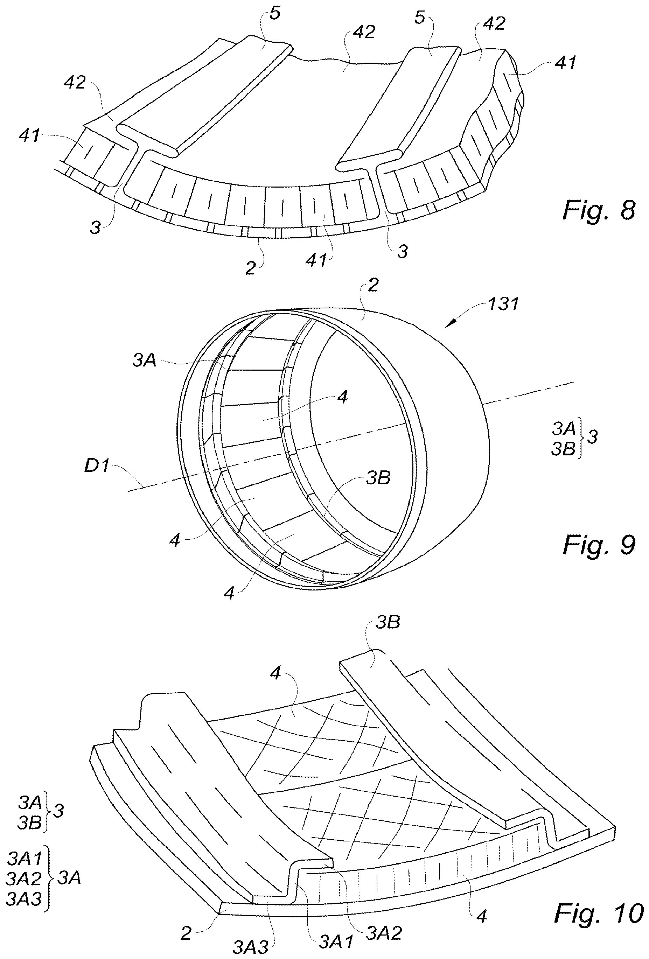

La figure 8 montre un autre mode de réalisation dans lequel les raidisseurs 3 constituent lesdits moyens de maintien. En particulier, chaque raidisseur 3 comprend un premier élément formant butée pour deux modules de traitement acoustique adjacents de manière à limiter le déplacement de ces modules suivant une direction tangentielle à la première peau 2. Chaque raidisseur 3 comprend aussi un deuxième élément 5 formant butée pour deux modules de traitement acoustique adjacents de manière à limiter le déplacement de ces modules suivant une direction normale à la première peau 2. Les deuxièmes éléments 5 des raidisseurs 3 constituent ainsi lesdits moyens de maintien. Dans cet exemple, les raidisseurs 3 ont une section en « T ».

Il ressort des exemples ici décrits que les moyens de maintien 5 coopèrent avec la deuxième peau 42 de chaque module de traitement acoustique 4 de manière à exercer un effort de maintien des modules 4 contre la première peau 2.

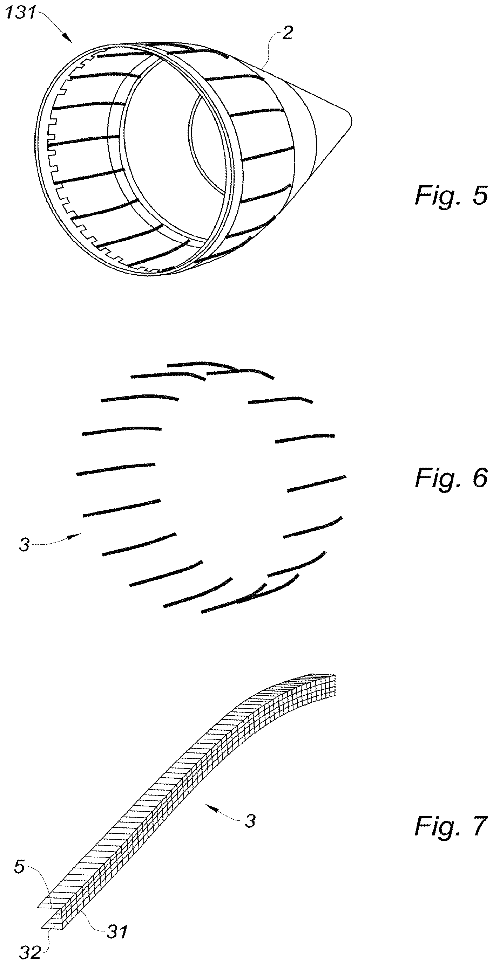

Dans les modes de réalisation des figures 2 et 5, les raidisseurs 3 s'étendent suivant des directions respectives parallèles à l'axe longitudinal D1 de la nacelle 1 lorsque la structure 131 (par exemple de la figure 2) est installée sur la nacelle 1 (figure 1).

En référence aux figures 9 et 10, les raidisseurs 3 de la structure 131 peuvent s'étendre circonférentiellement autour de l'axe longitudinal D1.

Dans cet exemple, plusieurs modules de traitement acoustique 4 sont enchâssés entre deux raidisseurs 3A et 3B.

Comme le montre la figure 10, les raidisseurs 3A et 3B peuvent avoir une section en « S » ou en « Z » avec :
- un premier élément 3A1 formant butée pour les modules de traitement acoustique 4 de manière à limiter le déplacement des modules 4 suivant une direction tangentielle à la première peau 2,
- un deuxième élément 3A2 formant butée pour les modules de traitement acoustique 4 de manière à limiter le déplacement des modules 4 suivant une direction normale à la première peau 2 : les moyens de maintien des modules 4 sont ainsi constitués par les deuxièmes éléments des raidisseurs 3A et 3B ;
- un troisième élément 3A3 de liaison du raidisseur 3A avec la première peau 2, l'élément 3A3 étant réalisé dans le même matériau ou assemblé par fixations mécaniques ou par collage ou par brasage ou soudure.

Le maintien des modules de traitement acoustique 4 peut être réalisé par toute autre technique appropriée, par exemple celles décrites ci-dessous.

Dans l'exemple de la figure 13, les raidisseurs 3 ont une section en « T » telle que décrite ci-dessus en référence à la figure 8.

Les moyens de maintien 5 de la structure de la figure 13 comprennent des lames élastiques 5 fixées sur les raidisseurs 3.

Par exemple, la lame élastique 5A peut être enroulée autour de la tête du raidisseur 3 tel qu'illustré à la figure 13 (lame 5A sur le raidisseur 3 à gauche de la figure). Dans cet exemple, la lame élastique 5A s'étend de part et d'autre du raidisseur 3 de manière à venir en appui contre la deuxième peau des modules de traitement acoustique 4 situés de part et d'autre de ce raidisseur 3 pour exercer un effort de maintien des modules contre la première peau (voir figure 13, raidisseur 3 à gauche).

Un autre mode de maintien consiste à fixer la lame élastique 5B à l'aide de moyens de fixation 51 qui peuvent être des boulons ou des rivets (lame 5B sur le raidisseur 3 à droite de la figure 13). Dans cet exemple, la lame élastique 5B s'étend d'un côté du raidisseur 3 de manière à venir en appui contre la deuxième peau du module de traitement acoustique 4 situé de ce côté du raidisseur 3 (voir figure 13, raidisseur 3 à droite).

Dans le mode de réalisation de la figure 14, dans lequel les raidisseurs 3 sont du type décrit ci-dessus en référence à la figure 8, les moyens de maintien comprennent des éléments élastiques transversaux 6 agencés pour exercer une pression transversale des modules de traitement acoustique 4 contre la première peau 2, de manière à immobiliser ces modules suivant une direction normale à la première peau.

Dans cet exemple, chaque élément élastique transversal 6 recouvre la deuxième peau d'un module de traitement acoustique 4 de manière à être en contact d'une part avec une partie des raidisseurs 3 en vis-à-vis de ce module 4 et d'autre avec la deuxième peau de ce module 4.

Comme le montre la figure 14, les éléments élastiques transversaux 6 peuvent être ondulés de manière à exercer un effort de maintien des modules 4 contre la première peau 2 par plusieurs zones de contact espacées les unes des autres.

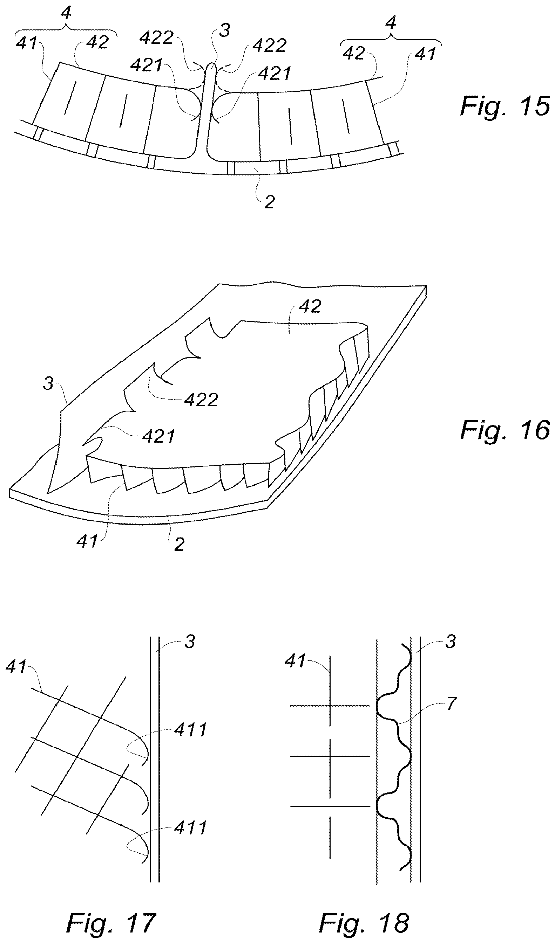

Les figures 15 à 18 montrent des moyens de maintien comprenant des éléments élastiques latéraux agencés pour exercer une pression latérale des modules de traitement acoustique 4 contre les raidisseurs 3 respectifs entre lesquels ces modules 4 sont enchâssés, de manière à immobiliser ces modules 4 suivant une direction tangentielle à la première peau 2.

Dans l'exemple des figures 15 et 16, les éléments élastiques latéraux 421 et 422 sont formés par la deuxième peau 42 des modules de traitement acoustique 4, en particulier par des d'excroissances de la deuxième peau 42 repliées.

Dans l'exemple de la figure 17, les éléments élastiques latéraux 411 sont formés par l'âme alvéolaire 41 des modules de traitement acoustique 4, en particulier par des replis d'extrémités des cloisons transversales de l'âme alvéolaire.

Dans l'exemple de la figure 18, un élément élastique latéral 7 peut consister en un clinquant ondulé et/ou peut être placé entre l'âme alvéolaire 41 d'un module de traitement acoustique et un raidisseur 3 correspondant.

Un autre exemple de structure 131 de type cône d'éjection est illustré aux figures 5 à 7.

Dans cet exemple, chaque raidisseur 3 comprend un premier élément 31 formant butée pour un module de traitement acoustique 4 de manière à limiter le déplacement de ce module 4 suivant une direction tangentielle à la première peau 2. Chaque raidisseur 3 comprend en outre un deuxième élément 5 formant butée pour un module de traitement acoustique de manière à limiter le déplacement de ce module suivant une direction normale à la première peau 2. Les deuxièmes éléments 5 de ces raidisseurs 3 constituent ainsi une partie desdits moyens de maintien.

Le maintien des modules de traitement acoustique 4 peut être complété par au moins un dispositif de maintien tel que présenté par exemple à la figure 13.

Par exemple, la structure du mode de réalisation des figures 5 à 7 peut comporter des éléments élastiques tels qu'illustrés aux figures 14 à 18 pour maintenir en pression le module entre raidisseurs.

En référence à la figure 7, un tel raidisseur 3 comprend aussi un troisième élément 32 qui peut être noyé dans la première peau 2 ou qui peut constituer une partie de la première peau 2.

En référence aux figures 2 et 5 notamment, la structure 131 comporte un ensemble de raidisseurs longitudinaux positionnés selon des méridiennes ou lignes géodésiques de la surface aérodynamique 2 de la structure 131. Cette disposition associée à un nombre de raidisseurs répartis régulièrement autour de la circonférence est particulièrement bien adaptée pour rehausser les modes propres de coque de la partie tonnoïde de la structure.

En référence à la figure 5, la structure 131 peut aussi comporter un raidisseur circonférentiel ou sensiblement perpendiculaire aux raidisseurs 3 longitudinaux. Ce raidisseur circonférentiel peut avoir une section en « T » ou en « Γ » permettant un maintien partiel éventuel des modules de traitement acoustique 4, et augmentant encore l'efficacité de l'ensemble des raidisseurs longitudinaux à l'augmentation des modes propres de structure.

Les matériaux utilisés dans une telle structure doivent pouvoir résister aux contraintes thermiques et mécaniques auxquelles elle sera exposée pendant la mise en œuvre de l'ensemble propulsif.

Par exemple, la première peau 2 et les raidisseurs 3 peuvent être réalisés dans un matériau composite à matrice céramique, et les modules de traitement acoustique 4 dans un matériau métallique tel que le titane ou un alliage à base de nickel.

Bien entendu, l'invention n'est pas limitée aux exemples qui viennent d'être décrits et de nombreux aménagements peuvent être apportés à ces exemples sans sortir du cadre de l'invention. Par exemple, la structure peut être utilisée pour constituer d'autres pièces de la nacelle telle que la buse primaire d'une tuyère d'échappement.

## Revendications

1. Structure (131) pour nacelle (1) d'ensemble propulsif d'aéronef comprenant une première peau (2), des raidisseurs (3) fixés à la première peau pour raidir cette première peau (2), et des modules de traitement acoustique (4), chaque module de traitement acoustique (4) comprenant une âme alvéolaire (41) et une deuxième peau (42) fixée à l'âme alvéolaire (41), la première peau (2) et les modules de traitement acoustique (4) étant agencés de sorte que l'âme alvéolaire (41) de chaque module (4) soit enserrée entre la deuxième peau (42) correspondante et la première peau (2), la première peau (2) ou la deuxième peau (42) des modules de traitement acoustique (4) étant acoustiquement perméable pour atténuer la puissance des ondes acoustiques dans l'âme alvéolaire (41) des modules (4), cette structure (131) étant telle que chaque module de traitement acoustique (4) est enchâssé entre au moins deux raidisseurs (3) respectifs, telle que chaque module de traitement acoustique (4) est en appui simple sur la première peau (2), et telle qu'elle comprend des moyens de maintien (5, 3A2, 5A, 5B) agencés pour maintenir chaque module de traitement acoustique (4) contre la première peau (2).

2. Structure selon la revendication 1, dans laquelle les moyens de maintien (5) coopèrent avec la deuxième peau (42) de chaque module de traitement acoustique (4) de manière à exercer un effort de maintien des modules (4) contre la première peau (2).

3. Structure selon la revendication 1 ou 2, dans laquelle chaque raidisseur (3) comprend un premier élément (3A1) formant butée pour un ou plusieurs modules de traitement acoustique (4) de manière à limiter le déplacement de ce ou ces modules (4) suivant une direction tangentielle à la première peau (2), et un deuxième élément (3A2) formant butée pour un ou plusieurs modules de traitement acoustique (4) de manière à limiter le déplacement de ce ou ces modules (4) suivant une direction normale à la première peau (2), ce deuxième élément (3A2) constituant au moins une partie desdits moyens de maintien.

4. Structure selon l'une quelconque des revendications 1 à 3, dans laquelle les raidisseurs (3) constituent au moins une partie desdits moyens de maintien (5, 3A2).

5. Structure selon l'une quelconque des revendications 1 à 4, dans laquelle les moyens de maintien comprennent des lames élastiques (5, 5A, 5B) fixées sur les raidisseurs (3).

6. Structure selon l'une quelconque des revendications 1 à 5, dans laquelle les moyens de maintien comprennent un ou plusieurs éléments élastiques latéraux (421, 422, 411, 7) agencés pour exercer une pression latérale des modules de traitement acoustique (4) contre les raidisseurs (3) respectifs entre lesquels ces modules (4) sont enchâssés, de manière à immobiliser ces modules (4) suivant une direction tangentielle à la première peau (2).

7. Structure selon l'une quelconque des revendications 1 à 6, dans laquelle les moyens de maintien comprennent un ou plusieurs éléments élastiques transversaux (6) agencés pour exercer une pression transversale des modules de traitement acoustique (4) contre la première peau (2), de manière à immobiliser ces modules (4) suivant une direction normale à la première peau (2).

8. Structure selon la revendication 6 ou 7, dans laquelle les éléments élastiques latéraux (421, 422, 411) ou transversaux sont formés par la deuxième peau (42) et/ou par l'âme alvéolaire (41) des modules de traitement acoustique (4).

9. Structure selon l'une quelconques des revendications 1 à 8, dans laquelle la première peau (2) et les raidisseurs (3) comprennent un matériau composite à matrice céramique.

10. Structure selon l'une quelconques des revendications 1 à 9, dans laquelle les modules de traitement acoustique (4) comprennent un matériau métallique tel que le titane ou un alliage à base de nickel.

11. Tuyère d'échappement (13) de nacelle (1) d'ensemble propulsif d'aéronef, **caractérisée en ce qu'**elle comprend une structure (131) selon l'une quelconque des revendications 1 à 10.

12. Nacelle (1) d'ensemble propulsif d'aéronef, **caractérisée en ce qu'**elle comprend une structure (131) selon l'une quelconque des revendications 1 à 10 ou une tuyère d'échappement (13) selon la revendication 11.

13. Nacelle (1) selon la revendication 12, dans laquelle les raidisseurs (3) de la structure s'étendent suivant des directions respectives parallèles à un axe longitudinal (D1) de la nacelle (1).

## Patentansprüche

1. Struktur (131) für die Gondel (1) eines Triebwerks eines Flugzeugs, umfassend eine erste Haut (2), an der ersten Haut befestigte Versteifungen (3) zum Versteifen dieser ersten Haut (2) und akustische Behandlungsmodule (4), wobei jedes akustische Behandlungsmodul (4) einen Wabenkern (41) und eine am Wabenkern (41) befestigte zweite Haut (42) umfasst, wobei die erste Haut (2) und die akustischen Behandlungsmodule (4) so angeordnet sind, dass der Wabenkern (41) jedes Moduls (4) zwischen der entsprechenden zweiten Haut (42) und der ersten Haut (2) eingeschlossen ist, wobei die erste Haut (2) oder die zweite Haut (42) der akustischen Behandlungsmodule (4) akustisch durchlässig sind, um die Stärke der akustischen Wellen im Wabenkern (41) der Module (4) zu dämpfen, wobei diese Struktur (131) so ist, dass jedes akustische Behandlungsmodul (4) zwischen mindestens zwei jeweiligen Versteifungen (3) eingeschlossen ist, so dass jedes akustische Behandlungsmodul (4) einfach an der ersten Haut (2) aufliegt, und so dass sie Haltemittel (5, 3A2, 5A, 5B) zum Halten jedes akustischen Behandlungselements (4) gegen die erste Haut (2) umfasst.

2. Struktur nach Anspruch 1, wobei die Haltemittel (5) mit der zweiten Haut (42) jedes akustischen Behandlungsmoduls (4) so zusammenwirken, dass sie eine Haltekraft der Module (4) gegen die erste Haut (2) ausüben.

3. Struktur nach Anspruch 1 oder 2, wobei jede Versteifung (3) ein erstes Element (3A1), das einen Anschlag für ein oder mehrere akustische Behandlungselemente (4) bildet, um die Verschiebung dieses oder dieser Module (4) entlang einer Tangentialrichtung an der ersten Haut (2) zu begrenzen, und ein zweites Element (3A2), das einen Anschlag für ein oder mehrere akustische Behandlungselemente (4) bildet, um die Verschiebung dieses oder dieser Module (4) entlang einer Normalenrichtung an der ersten Haut (2) zu begrenzen, umfasst, wobei dieses zweite Element (3A2) mindestens einen Teil der Haltemittel darstellt.

4. Struktur nach einem der Ansprüche 1 bis 3, wobei die Versteifungen (3) mindestens einen Teil der Haltemittel (5, 3A2) darstellen.

5. Struktur nach einem der Ansprüche 1 bis 4, wobei die Haltemittel elastische Lamellen (5, 5A, 5B) umfassen, die an den Versteifungen (3) befestigt sind.

6. Struktur nach einem der Ansprüche 1 bis 5, wobei die Haltemittel ein oder mehrere elastische Lateralelemente (421, 422, 411, 7) umfassen, die angeordnet sind, um einen Lateraldruck der akustischen Behandlungsmodule (4) gegen die jeweiligen Versteifungen (3) auszuüben, zwischen denen diese Module (4) eingefasst sind, um diese Module (4) entlang einer Tangentialrichtung an der ersten Haut (2) anzuhalten.

7. Struktur nach einem der Ansprüche 1 bis 6, wobei die Haltemittel ein oder mehrere elastische Transversalelemente (6) umfassen, die angeordnet sind, um eine Transversaldruck der akustischen Behandlungsmodule (4) gegen die erste Haut (2) auszuüben, um diese Module (4) entlang einer Normalenrichtung an der ersten Haut (2) anzuhalten.

8. Struktur nach Anspruch 6 oder 7, wobei die elastischen Lateralelemente (421, 422, 411) oder Transversalelemente von der zweiten Haut (42) und/oder vom Wabenkern (41) der akustischen Behandlungsmodule (4) gebildet werden.

9. Struktur nach einem der Ansprüche 1 bis 8, wobei die erste Haut (2) und die Versteifungen (3) einen keramischen Matrix-Verbundwerkstoff umfassen.

10. Struktur nach einem der Ansprüche 1 bis 9, wobei die akustischen Behandlungsmodule (4) ein metallisches Material wie Titan oder eine nickelbasierte Legierung umfassen.

11. Austrittsdüse (13) der Gondel (1) des Flugzeugtriebwerks, **dadurch gekennzeichnet, dass** sie eine Struktur (131) nach einem der Ansprüche 1 bis 10 umfasst.

12. Gondel (1) des Flugzeugtriebwerks, **dadurch gekennzeichnet, dass** sie eine Struktur (131) nach einem der Ansprüche 1 bis 10 oder eine Austrittsdüse (13) nach Anspruch 11 umfasst.

13. Gondel (1) nach Anspruch 12, wobei die Versteifungen (3) der Struktur sich entlang jeweiliger Richtungen erstrecken, die parallel zu einer Längsachse (D1) der Gondel (1) sind.

## Claims

1. A structure (131) for an aircraft propulsion unit nacelle (1) comprising a first skin (2), stiffeners (3) fixed to the first skin to stiffen this first skin (2), and acoustic treatment modules (4), each acoustic treatment module (4) comprising a cellular core (41) and a second skin (42) fixed to the cellular core (41), the first skin (2) and the acoustic treatment modules (4) being arranged so that the cellular core (41) of each module (4) is clasped between the corresponding second skin (42) and the first skin (2), the first skin (2) or the second skin (42) of the acoustic treatment modules (4) being acoustically permeable to attenuate the power of the acoustic waves in the cellular core (41) of the modules (4), this structure (131) being such that each acoustic treatment module (4) is embedded between at least two respective stiffeners (3), such that each acoustic treatment module (4) is simply bearing on the first skin (2), and such that it comprises holding elements (5, 3A2, 5A, 5B) arranged to hold each acoustic treatment module (4) against the first skin (2).

2. The structure according to claim 1, wherein the holding elements (5) cooperate with the second skin (42) of each acoustic treatment module (4) so as to exert a force for holding the modules (4) against the first skin (2).

3. The structure according to claim 1 or 2, wherein each stiffener (3) comprises a first element (3A1) forming a stop for one or more acoustic treatment modules (4) so as to limit the displacement of this or these modules (4) in a direction tangential to the first skin (2), and a second element (3A2) forming a stop for one or more acoustic treatment modules (4) so as to limit the displacement of this or these modules (4) in a direction normal to the first skin (2), this second element (3A2) constituting at least one portion of said holding elements.

4. The structure according to any one of claims 1 to 3, wherein the stiffeners (3) constitute at least one portion of said holding elements (5, 3A2).

5. The structure according to any one of claims 1 to 4, wherein the holding elements comprise elastic blades (5, 5A, 5B) fixed on the stiffeners (3).

6. The structure according to any one of claims 1 to 5, wherein the holding elements comprise one or more lateral elastic elements (421, 422, 411, 7) arranged to exert lateral pressure on the acoustic treatment modules (4) against the respective stiffeners (3) between which these modules (4) are embedded, so as to immobilize these modules (4) in a direction tangential to the first skin (2).

7. The structure according to any one of claims 1 to 6, wherein the holding elements comprise one or more transverse elastic elements (6) arranged to exert transverse pressure of the acoustic treatment modules (4) against the first skin (2), so as to immobilize these modules (4) in a direction normal to the first skin (2).

8. The structure according to claim 6 or 7, wherein the lateral (421, 422, 411) or transverse elastic elements are formed by the second skin (42) and/or by the cellular core (41) of the acoustic treatment modules (4).

9. The structure according to any one of claims 1 to 8, wherein the first skin (2) and the stiffeners (3) comprise a composite material with a ceramic matrix.

10. The structure according to any one of claims 1 to 9, wherein the acoustic treatment modules (4) comprise a metallic material such as titanium or a nickel-based alloy.

11. An exhaust conduit (13) of aircraft propulsion unit nacelle (1), **characterized in that** it comprises a structure (131) according to any one of claims 1 to 10.

12. An aircraft propulsion unit nacelle (1), **characterized in that** it comprises a structure (131) according to any one of claims 1 to 10 or an exhaust conduit (13) according to claim 11.

13. The nacelle (1) according to claim 12, wherein the stiffeners (3) of the structure extend in respective directions parallel to a longitudinal axis (D1) of the nacelle (1).
